# EUROPÄISCHE PATENTSCHRIFT

(11) **EP 1 225 535 B1**
(45) Veröffentlichungstag und Bekanntmachung des Hinweises auf die Patenterteilung: **05.08.2009**
(21) Anmeldenummer: 02000208.5
(22) Anmeldetag: 10.01.2002
(51) Int. Cl.: G06K 1/12

(54) **Verfahren zur Bearbeitung einer Materialbahn**
Method of processing a web material
Méthode de traitement d'un matériau en bande

(30) Priorität: 12.01.2001 DE 10101860
(43) Veröffentlichungstag der Anmeldung: 24.07.2002
(73) Patentinhaber: JENOPTIK Automatisierungstechnik GmbH, 07745 Jena (DE)
(72) Erfinder: Preuss, Norbert, 07743 Jena (DE); Wollmann, Werner, 07747 Jena (DE)
(74) Vertreter: Schaller, Renate

(56) Entgegenhaltungen:
- EP-A- 1 014 201
- US-A- 4 937 810
- PATENT ABSTRACTS OF JAPAN vol. 1998, no. 08, 30. Juni 1998 (1998-06-30) & JP 10 072767 A (N C EE:KK), 17. März 1998 (1998-03-17)

## Beschreibung

Die Erfindung betrifft ein Verfahren zur Bearbeitung einer Materialbahn, insbesondere für die Verpackungsmittelindustrie.

Zur Herstellung von Verpackungszuschnitten werden auf einer Materialbahn auf längs und quer nebeneinander liegenden Teilflächen, die der Größe gewünschter Verpackungszuschnitte entsprechen, Strukturbilder erzeugt. Solche Strukturbilder können z.B. Druckbilder, Prägebilder und/oder Perforationsbilder (Anordnung von Präge- oder Perforationslinien) sein. Während eine Lageabweichung eines Druckbildes von seiner Solllage gegenüber den Schnitt-und Faltkanten des Verpackungszuschnittes auf der fertig gefalteten Verpackung lediglich optisch störend ist, kann eine Lageabweichung des Prägebildes, welches die Faltkanten der Verpackung bestimmt, dazu führen, dass die Klebeflächen, deren Breite in der Regel durch eine Faltkante und eine Schnittkante begrenzt sind, nicht sämtlich hinreichend breit genug sind, um eine sichere Klebeverbindung zu gewährleisten. Ein Perforationsbild hingegen, als Öffnungshilfe vorgesehen, muss in seiner Lage zum Prägebild stimmen, damit es seiner Funktion gerecht werden kann.
Daraus ergibt sich die Notwendigkeit, dass die Erzeugung eines Schnittbildes und gegebenenfalls eines Perforationsbildes lageabhängig vom Prägebild erzeugt wird. Unter einem Schnittbild sollen die Trennlinien verstanden werden, entlang denen die Materialbahn im letzten Arbeitsschritt in mehrere schmale Materialbahnen aufgetrennt wird und die dann jeweils zwei Kanten der Verpackungszuschnitte bilden.
Der Bedarf, eine mit Strukturbildern versehene Materialbahn lagebezogen zu den Strukturbildern zu zerteilen, besteht nicht nur bei der Herstellung von Verpackungszuschnitten, sondern kann bei der Herstellung unterschiedlichster Teile von Interesse sein, die durch Ausschneiden oder Ausstanzen aus einer bedruckten, geprägten oder anderweitig mit Strukturbildern versehnen Materialbahn entstehen. Dies können z.B. mechanische oder elektrische Bauelemente sein, Dekorationsteile oder Druckerzeugnisse.

Die Zuführung der Materialbahn zu den Werkzeugen der einzelnen Bearbeitungseinrichtungen findet im Stand der Technik sowohl gesteuert als auch ungesteuert statt.
Bei der ungesteuerten Materialbahnführung wird die Zuführung zum Werkzeug z.B. entweder allein durch die Ausrichtung der die Materialbahn fördernden Rollen, eine Führung der Materialbahnkante an einem Anschlag oder wie aus dem EP 0 238 043 bekannt über die Oberflächenstruktur realisiert. Die Oberflächenstruktur der Materialbahn ist hier mit einer mechanisch abgreifbaren längsgerichteten Oberflächenstruktur versehen. Mit Hilfe von Profilrollen oder ähnlichen Vorrichtungen, die in diese Strukturen eingreifen, können die Materialbahnen in exakter Ausrichtung zu diesen Strukturen einer Bearbeitungsvorrichtung, wie z.B. einer Schneideinrichtung zugeführt werden. Eine ungesteuerte Führung setzt in der Regel einen höheren mechanischen Aufwand voraus und ist beschränkt auf Bearbeitungsverfahren mit geringen Anforderungen an die Lagegenauigkeit des Bearbeitungsergebnisses.

Für eine gesteuerte Führung werden im Stand der Technik in zuvor aufgebrachten Druckbildern vorhandene oder zusätzlich aufgebrachte Druckmarkierungen oder Drucklinien optisch erfasst und als Steuergröße für die Zuführung der Materialbahn zur Schneideinrichtung oder Prägeeinrichtung verarbeitet.

Häufig werden Bestandteile der beim Drucken ohnehin erzeugten Druckbilder, sofern sie hinsichtlich ihrer Gestaltung und ihres Kontrastes geeignet sind, als Steuerlinien oder Steuermarkierungen verwendet. Ein nachfolgender Trennprozess, gesteuert durch die Erfassung der Lageabweichung zu solch einer Steuerlinie oder -markierung, findet damit lageabhängig vom Druckbild statt. D.h. wenn das Druckbild zur Materialbahnkante schief entsteht, verläuft auch die Trennlinie nicht parallel zur Materialbahnkante. Für Verpackungsmittelzuschnitte, wie z.B. Geschenkpapier oder sonstige Druckerzeugnisse, deren Außenkanten eine definierte Lage zu dem darauf befindlichen Druckbild haben sollten, ist eine solche Lösung günstig.

Ebenfalls bekannt ist das gezielte Aufbringen von gedruckten Steuerlinien und - markierungen während des Aufbringens eines gewünschten Druckbildes. Dies geschieht in der Regel in einem druckfreien Randbereich, um einen konstanten Kontrast zwischen der Steuerlinie bzw. den Steuermarkierungen und der diese umgebenden Oberfläche zu erzielen. Dieser druckfreie Randbereich bildet am Ende der Bearbeitung der Materialbahn einen nicht zu vernachlässigenden Abfallstreifen in der Länge der Materialbahn. Bei den dem Drucken nachfolgenden Bearbeitungsschritten, z.B. dem Schneiden, werden die Lageabweichungen dieser Markierungen von einer Solllage erfasst und als Steuersignal verwendet, um die Längsschnitte in der richtigen Lage zum Druck zu halten. Bekannt sind hier durchgehend aufgedruckte Steuerlinien, die mittels einer Reflexionslichtschranke erfasst werden oder wie aus der DE 21 46 492 bekannt, Marken, die paarweise symmetrisch zu einer zur Bahnrichtung verlaufenden Geraden angeordnet sind.
Falls sich die Materialbahn in ihrer Solllage befindet, werden in dieser Lösung beide Marken gleichzeitig abgetastet. Ist die Bahn jedoch gegen ihre Solllage verschoben, werden beide Marken zeitlich unterschiedlich abgetastet und es wird ein Steuersignal zur Nachführung der Materialbahn in ihre Solllage erzeugt. Die Materialbahn wird somit parallel zur Materialbahnrichtung geschnitten.
Da die Druckmarken oder Drucksteuerlinien üblicherweise mit der Druckeinrichtung erzeugt werden mit der auch die Druckbilder auf die Materialbahn gedruckt werden, können sie auch nur zu den Druckbildern eine feste Lagebeziehung haben.

Während eine Differenz zwischen Druck- und Schnittbild zwar unschön aussieht, aber auf die Funktionalität einer Verpackung keine Auswirkung hat, kann eine Differenz zwischen dem Prägebild und dem Perforationsbild oder dem Prägebild und dem Schnittbild den Ausschuss für die Verpackung bedeuten. Wird nun wie gegenwärtig üblich, sowohl der Bearbeitungsschritt des Prägens als auch der des Schneidens an Hand einer während des Druckens aufgebrachten Marke oder Steuerlinie gesteuert, kann über die Toleranzkette ein unzulässig großer Fehler entstehen.
Das Aufbringen einer Drucksteuerlinie in Verbindung mit anderen Bearbeitungsschritten als dem Drucken ist zwar theoretisch denkbar, aber praktisch kaum realisierbar. Der Nachteil von Drucksteuerlinien ist außerdem, dass eine Steuerung an Hand einer Drucklinie, deren minimale Breite im mm-Bereich liegt, oft nicht genau genug ist. Drucksteuerlinien oder Druckmarken dienen ausschließlich einer Steuerung der Materialbahnzuführung. Sie können grundsätzlich nicht Träger von zufälligen prozessbezogenen Informationen, z.B. über aufgetretene Bearbeitungsfehler sein.
Bearbeitungsfehler, die während der einzelnen Bearbeitungsschritte entstehen, werden derzeit in der Regel erst nach Verfahrensabschluss durch Sichtkontrolle wahrgenommen. Dadurch werden fehlerhafte Materialbahnabschnitte, z.B. entstanden durch das zeitweise Fehlen von Druckfarbe, unnötigerweise in nachfolgenden Bearbeitungsschritten weiter bearbeitet. Vor dem anschließenden Auftrennen der Materialbahn in einzelne Materialbahnstreifen und dem Aufwickeln dieser Materialbahnstreifen auf für den Abnehmer weiterverarbeitbare Rollen muss die Materialbahn auf fehlerhafte Abschnitte untersucht und gegebenenfalls diese entfernt werden.

In der EP 1 014 201 A2 ist ein Verfahren beschrieben, bei dem die Positionierung einzelner photopolymerisierbarer Reliefstrukturen auf einem Träger anhand zuvor eingebrachter Positionsmarkierungen erfolgt. Es wird vorgeschlagen, diese Positionsmarkierungen vorteilhaft mit einem IR-Laser zu erzeugen.

In der US 4,937,810 ist ein optisches Aufzeichnungsband beschrieben, in welches über dessen Breite in Längsrichtung des Bandes voneinander beabstandete kontinuierliche Laserspuren eingebracht sind. Der Zweck dieser Spuren ist die Führung eines Daten einschreibenden Laserstrahles zwischen diesen Spuren.

In der JP H10-072767 ist ein Gerät zum Erzeugen von Stoffmustern offenbart, bei dem ein Muster durch Laserpunkte auf die Stoffbahn projiziert wird und anschließend mit diesen Laserspots korrespondierend mustererzeugende Nadeln in den Stoff gestoßen werden.

In den genannten drei Lösungen dienen die Lasermarkierungen ausschließlich dazu, um eine temporäre beziehungsweise dauerhafte Markierung zu schaffen, an deren örtliche Lage sich ein nachfolgender Bearbeitungsschritt orientiert. Sie haben keine über die Ortsmarkierung hinausgehende Funktion.

Die Aufgabe der Erfindung betrifft ein Verfahren zur Bearbeitung einer Materialbahn, bei dem mehrere sich überlagernde Strukturbilder auf der Materialbahn hergestellt werden und bei dem eine Steuerlinie, lagebezogen zu einem dieser Strukturbilder erzeugt wird und die Materialbahn an Hand dieser Steuerlinie bei der Erzeugung nachfolgender Strukturbilder, einschließlich des Schnittbildes, quer zur Transportrichtung gesteuert geführt wird. Darüber hinaus sollen in die Materialbahn zufällige prozessbezogene Informationen eingebracht werden, die eine zeitliche Steuerung der Materialbahnzuführung und der Bearbeitungsvorrichtungen ermöglichen.
Die erzeugte Steuerlinie soll sehr feinfühlig detektierbar, optisch unscheinbar sein und eine sehr genaue Lagesteuerung ermöglichen.

Diese Aufgabe wird für ein Verfahren zur Bearbeitung einer Materialbahn mit den Merkmalen des Anspruches 1 gelöst.
Eine vorteilhafte Weiterbildung ist im Unteranspruch beschrieben.

Gleich den aus der DE 2146492 bekannten Verfahren zur Bearbeitung einer Materialbahn umfasst das erfindungsgemäße Verfahren als letzten Bearbeitungsschritt das Schneiden der Materialbahn entsprechend einem Schnittbild in mehrere Materialbahnstreifen und wenigstens einen vorgeordneten Bearbeitungsschritt, bei dem auf der Materialbahn ein Strukturbild, hier ein Druckbild, erzeugt wird.
Neu gegenüber der DE 2146492 ist, dass während der Erzeugung des Druckbildes oder eines weiteren Strukturbildes eine Steuerlinie mittels Laser in fester Lagebeziehung zu dem das jeweilige Strukturbild erzeugenden Werkzeug (z.B. Präge-, Perforations-, Stanz- oder Druckwerkzeug) in die Materialbahn eingebracht wird.
Vorteilhafterweise wird die Lasersteuerlinie möglichst während einer der ersten Bearbeitungsschritte eingebracht, so dass auch für nachfolgende, dem Schneiden vorgelagerte Bearbeitungsschritte, die Materialbahnzuführung zum Werkzeug der Bearbeitungsvorrichtung mittels der Lasersteuerlinie gesteuert werden kann. Informationen aus den der Laserlinienerzeugung zeitlich vorgeordneten oder gleichzeitig ablaufenden Bearbeitungsschritten werden auf die Lasersteuerlinie kodiert, indem durch eine geeignete Steuerung des Lasers Lasermarkierungen gesetzt werden. Solche Lasermarkierungen entstehen z.B. durch Unterbrechungen der Laserstrahlung unterschiedlicher Anzahl und Länge, Änderung der Strahlungsleistung, Änderung der Frequenz bei Verwendung eines gepulsten Lasers, durch einen Versatz der Lasersteuerlinie oder deren abschnittsweise mehrzeilige Ausführung. Entscheidend ist, dass die Lasersteuerlinie zum Tragen der Information so verändert wird, dass sich der Signalpegel der reflektierten Detektionsstrahlung deutlich von dem unterscheidet, den die nichtmarkierte Laserlinie bewirkt. Damit ein fehlerhafter Materialbahnabschnitt entfernt werden kann bzw. nicht weiter bearbeitet wird, werden Markierungen gesetzt, deren Detektion und Umsetzung in Steuersignale z.B. eine Reduzierung der Transportgeschwindigkeit, einen Transportstop oder einen Bearbeitungsstop bewirken. Um die Lage der Lasersteuerlinie und die Lasermarkierungen zu erfassen, wird die Lasersteuerlinie bei nachfolgenden Bearbeitungsschritten abgetastet. Hierfür besonders geeignet ist eine CCD-Zeile oder eine CCD-Matrix mit vorgeordneter Optik und einer Beleuchtung.
Ein Weglaufen der Lasersteuerlinie wird als Verschiebung des Signalpegels auf der Zeile oder Matrix wahrgenommen, hingegen eine Lasermarkierung bewirkt eine sprunghafte Änderung des Signalpegels.
Die Lasermarkierungen können nicht nur mit der Erzeugung der Lasersteuerlinie gesetzt werden, sondern auch während folgender Bearbeitungsschritte hinzugefügt werden. Dadurch können Informationen bezüglich neu entstandener Fehler als Lasermarkierungen kodiert oder bislang nur einerseits markierte Bearbeitungsfehler andererseits markiert werden. Diese zusätzlichen Lasermarkierungen müssen nicht zwingend im Bereich der Steuerlinie erzeugt werden, sie können jedoch dadurch mit der Steuerlinie abgetastet werden, was nur einen Detektor erforderlich macht. Bei der letzten Bearbeitungsstufe, dem Schneiden, kann nunmehr das Schnittbild lagebezogen zur Lasersteuerlinie erzeugt werden und der Schneidprozess bei Detektion einer entsprechenden Lasermarkierung gestoppt werden, um z.B. einen fehlerhaften Bereich der Materialbahn zu entfernen.
Durch eine bahngeschwindigkeitsabhängige Regelung der Laserleistung wird eine Steuerlinie gleichbleibender Qualität erzeugt. Sie ist gegenüber einer gedruckten Steuerlinie wesentlich schmaler und scharfkantiger und daher feinfühliger detektierbar. Die Lasersteuerlinie, die durch Materialveränderung oder Materialabtrag entsteht, ist besonders gut detektierbar, wenn ein hoher Kontrast zwischen Lasersteuerlinie und Umgebung besteht, d.h. wenn die eigentliche Oberfläche der Materialbahn für die Beleuchtungsstrahlung des Detektors und die durch den Materialabtrag freigelegte Schicht bzw. die bewirkte Materialveränderung der Materialbahn für die Beleuchtungsstrahlung einen deutlich unterschiedlichen Reflexionsgrad aufweisen.

Eine Fertigungsstraße zur Durchführung des erfindungsgemäßen Verfahrens besteht in der Regel aus mehreren Bearbeitungsstationen, die jeweils eine Abwickelvorrichtung, eine Aufwickelvorrichtung und mindestens eine dazwischen angeordnete Bearbeitungseinrichtung umfasst. In einer Bearbeitungsstation können dann mehrere Bearbeitungseinrichtungen hintereinander angeordnet werden, wenn es möglich ist, die entsprechenden Bearbeitungsschritte bei gleicher Transportgeschwindigkeit der Materialbahn und in entsprechender Reihenfolge durchzuführen.

Eine der Bearbeitungseinrichtungen steht mit einem Markierungslaser in Verbindung, der auf der Materialbahn eine Laserlinie erzeugt, die eine Bezugslinie zu dem mit dieser Bearbeitungseinrichtung erzeugten Strukturbild darstellt, während wenigstens eine weitere Bearbeitungseinrichtung mit einem Detektor in Verbindung steht, welcher die Laserlinie abtastet. Der Detektor ist mit einer Steuereinrichtung verbunden, welche die Zuführung der Materialbahn zum Werkzeug der Bearbeitungseinrichtung steuert. Bei der Erzeugung der Laserlinie können wie bereits erwähnt Informationen aufkodiert werden. Da sich die Informationen auf Fehler auf der Materialbahn beziehen die kurzzeitlich vorher verursacht wurden, liegt die Kodierung der Information hierzu zwangsläufig im Richtungssinn des Transportes hinter dem Fehler. Wird nun in der nächsten Bearbeitungsstation die Materialbahn im entgegengesetzten Richtungssinn transportiert, kann diese Information zeitlich vor dem Fehler erfasst werden und entsprechend der Ansteuerung der Transport verlangsamt und gestoppt werden oder die Bearbeitung über die Länge des Fehlers ausgesetzt werden, wenn die Fehlerlänge in der kodierten Information enthalten ist.
Damit die Fehlerinformation erfassbar ist, unabhängig in welchem Richtungssinn die Materialbahn transportiert wird, muss die Information jeweils beidseitig des Fehlers auf die Laserlinie kodiert werden. Es ist daher sinnvoll nicht nur in der Bearbeitungsstation, in dem die Laserlinie erzeugt wird, einen Markierungslaser vorzusehen, sondern in allen Bearbeitungsstationen, wo es denkbar ist, dass Informationen zum stattfindenden oder vorhergehenden Bearbeitungsschritt für nachfolgende Bearbeitungsschritte als Steuersignale nützlich sind.

Nachfolgend soll das erfindungsgemäße Verfahren anhand eines konkreten Ausführungsbeispieles unter der Verwendung von Zeichnungen erläutert werden. Hierzu zeigt:
- Fig. 1: eine Materialbahn, auf der die Lageabweichungen der Druckbilder ersichtlich sind
- Fig. 2a-2c: verschiedene Ausführungen für eine Lasersteuerlinie mit Markierungen

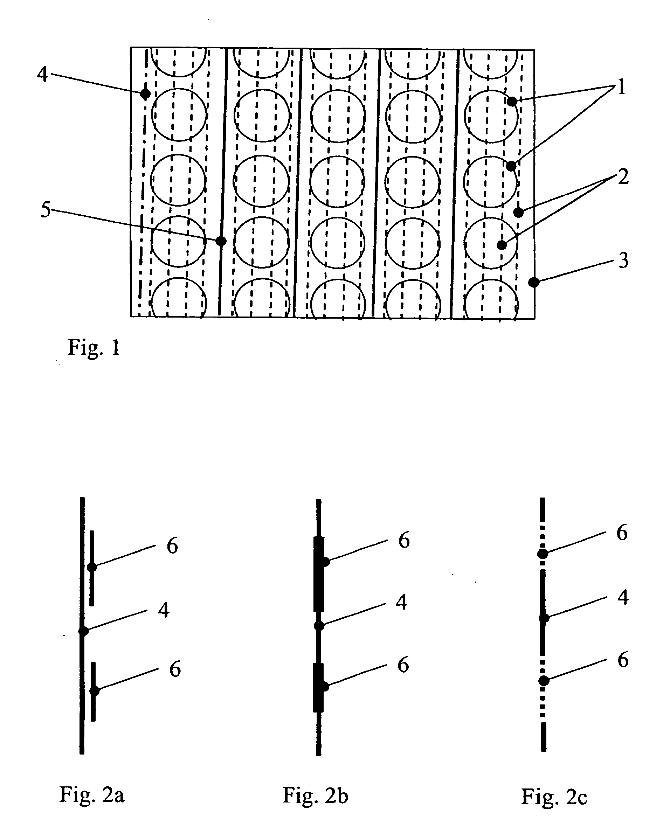

Bearbeitet werden soll eine dreischichtige Materialbahn bestehend aus einer Farbschicht, einer Kartonschicht und einer Kunststoffschicht. Auf der Materialbahn sollen nebeneinander jeweils fünf Verpackungsmittelzuschnitte entstehen, so dass im letzten Bearbeitungsprozess die Materialbahn in fünf gleich breite Materialbahnstreifen mit jeweils in einer Reihe hintereinander liegenden Verpackungsmittelzuschnitten geschnitten und auf fünf Rollen aufgewickelt wird.
Zu Beginn des Verfahrens wird die auf einer Rolle aufgewickelte Materialbahn in einer ersten Abwickelvorrichtung beginnend mit ihrem freien Ende, definiert als Anfang, abgewickelt, beim Durchlaufen einer Druckeinrichtung fortlaufend mit fünf nebeneinander liegenden Druckbildern bedruckt, dann beim Durchlaufen einer Prägeeinrichtung fortlaufend mit fünf nebeneinander liegenden, die Druckbilder überlagernden Prägebildern versehen und in einer ersten Aufwickeleinrichtung wieder auf eine Rolle aufgewickelt, wobei das jetzt freie Ende der Materialbahn als Ende definiert werden soll.
Die Führung der Materialbahn zwischen der ersten Abwickel- und der ersten Aufwickelvorrichtung erfolgt durch mechanischen Zwang und ist ungesteuert. Dadurch haben, wie in Fig. 1 dargestellt, weder die Druckbilder 1 noch die Prägebilder über die gesamte Materialbahnlänge einen gesicherten konstanten Abstand zur Materialbahnkante 3, noch haben die Druckbilder 1 und Prägebilder 2 zueinander über die gesamte Länge der Materialbahn eine konstante Relativlage. Demnach können die Prägebilder 2 zu dem jeweils zuzuordnenden Druckbild 1 unterschiedlich versetzt sein.
In Verbindung mit der Erzeugung der Prägebilder 2 wird auf der Materialbahn eine Lasersteuerlinie 4 erzeugt. Der dazu notwendige Markierungslaser muss zum Werkzeug der Prägevorrichtung einen festen Abstand aufweisen, damit die Lasersteuerlinie 4 als Bezugslinie zu den Prägebildern 2 über die gesamte Länge der Materialbahn einen konstanten Abstand hat.
Der Markierungslaser richtet einen Laserstrahl auf die bewegte Materialbahn und bewirkt damit einen linienförmigen Abtrag der Farbschicht. Der Abtrag der Papierschicht sollte möglichst vollständig sein, so dass die Kartonschicht freigelegt wird. Die Kartonschicht weist zumindest in diesem Bereich für die Detektionsstrahlung, auf die an späterer Stelle eingegangen werden soll, einen deutlich unterschiedlichen Reflexionsgrad gegenüber der angrenzenden Papierschicht auf. Dies kann, sofern die notwendige Reflektionsgrad nicht durch das Kartonmaterial gegeben ist, durch Auftrag einer mehr oder weniger reflektierenden Schicht bei der Herstellung der Materialbahn erreicht werden. Die Strahlungsleistung des Markierungslasers wird geschwindigkeitsabhängig gesteuert, damit auch bei Geschwindigkeitsschwankungen durch einen konstanten Materialabtrag eine gleichmäßige Laserlinie entsteht.

In anderen, hier nicht weiter beschriebenen Ausführungsformen, kann die Laserstrahlung in Abhängigkeit von der Strahlungsintensität, Strahlungswellenlänge und den Eigenschaften der Materialbahn statt eines Materialabtrages auch nur eine Materialveränderung bewirken, die zu einem unterschiedlichen Reflexionsgrad für die Detektionsstrahlung entlang der mit der Laserstrahlung beaufschlagten Linie führt.
Die Lasersteuerlinie 4 kann in einem beliebigen Abstand zur Materialbahnkante 3 erzeugt werden, d. h. sie muss nicht in einem druckfreien Flächenbereich verlaufen wie eine gedruckte Steuerlinie. Man wird sie bevorzugt in Abhängigkeit vom Druckbild 1 dort erzeugen, wo sie besonders gut detektierbar ist, d.h. ein möglichst hoher Kontrast zwischen der angrenzenden Oberfläche und der freigelegten Kartonschicht gegeben ist. Die Möglichkeit, die Lasersteuerlinie 4 in dem Druckbild 1 zu erzeugen, führt gegenüber dem Stand der Technik, bei dem zum Aufbringen einer gedruckten Steuerlinie ein druckfreier Randbereich vorgesehen werden muss, zu einer beachtlichen Materialeinsparung. Die Lasersteuerlinie 4 kann auch am Ort einer zu erzeugenden Schnittlinie, eines Schnittbildes 5, eingebracht werden.
Darüber hinaus ist es von Vorteil, dass die Lasersteuerlinie berührungsfrei und ohne einen Hilfsstoff, wie z.B. Farbe erzeugt wird. Durch die extrem schmale Ausführung ist die Lasersteuerlinie in ihrer Lage sehr feinfühlig detektierbar. Sie kann mit einer extrem hohen Geschwindigkeit erzeugt werden.

Die Lasersteuerlinie 4 dient nicht nur als Steuerlinie für die Ausrichtung der Werkzeuge nachgeordneter Bearbeitungsvorrichtungen, sondern soll auch als Informationsträger bezüglich vorgeordnet ablaufender Bearbeitungsschritte genutzt werden. Störungen während einzelner Bearbeitungsschritte oder das Ende der Materialbahn werden in diesem Ausführungsbeispiel als Information, wie in Fig. 2 dargestellt, eingebracht indem die durchgehende einfache Steuerlinie streckenweise als Doppellinie ausgeführt wird. Eine unterschiedliche Länge der Doppellinie kann eine unterschiedliche Information kodieren. Z.B. kann eine 1m lange Doppellinie bedeuten: "Transportgeschwindigkeit reduzieren", eine 3m lange Doppellinie: "Stoppen" und eine noch längere Doppellinie: "Weitertransportieren". Der Detektor erkennt diese Markierungen 6 durch den Empfang deutlich unterschiedlicher Signalpegel der detektierten Strahlung. Durch eine von den Detektionssignalen abhängige Steuerung des Materialtransports oder der Bearbeitungswerkzeuge kann somit der Transport gestoppt werden, um fehlerhafte Abschnitte der Materialbahn herauszutrennen oder um diese Abschnitte nicht überflüssigerweise weiter zu bearbeiten. Wie bereits erläutert sind auch andere Ausführungsformen für die Lasersteuerlinie denkbar. So kann wie in Fig.2b gezeigt zum Setzen von Markierungen die Strahlungsleistung zeitweise erhöht werden, was zu einem größeren Energieeintrag und damit zu einer stärkeren Veränderung, oder Abtrag des Oberflächenmaterials führt. Hier können ebenso wie bei dem zu erst genannten Ausführungsbeispiel die Markierungen während der Erzeugung und danach gesetzt werden. Nur werden der Erzeugung der Lasersteuerlinie können Markierungen gesetzt werden, wenn z.B. wie in Fig. 2c gezeigt die Laserstrahlung unterschiedlich lang unterbrochen wird.
Die nach dem Prägen aufgewickelte Materialbahnrolle wird zum Weiterbearbeiten im entgegengesetzten Richtungssinn wieder abgewickelt, d.h. das Ende durchläuft die nächste Bearbeitungsvorrichtung, hier eine Beschichtungsvorrichtung, zuerst. Zu der Beschichtungsvorrichtung gehört ein Detektor mit einer Strahlungsquelle und vorgeordneter Optik, der oberhalb der Lasersteuerlinie eine Detektionsstrahlung auf die Lasersteuerlinie richtet und die reflektierte Strahlung erfasst. Aus der detektierten Strahlung werden Steuersignale gebildet, die dann zu einer Steuereinheit der Beschichtungsvorrichtung geleitet werden, wenn sie durch eine Markierung verursacht wurden. Zur Steuerung der Materialbahnzuführung werden diese Signale bei der Beschichtung nicht benötigt. Bevor die nun beschichtete Materialbahn erneut aufgewickelt wird, läuft sie unter einem zweiten Markierungslaser durch. Dieser kann gegebenenfalls eine zweite Markierung zu einem Fehler anfangsseitig setzen, der bereits endseitig dieses Fehler markiert wurde. Das Setzen der Markierung erfolgt, indem neben der einzeiligen Lasersteuerlinie eine entsprechend lange zweite einzeilige Linie erzeugt wird. Damit ist der kodierte Fehler detektierbar, unabhängig mit welchem Richtungssinn die Materialbahn nachfolgende Bearbeitungsvorrichtungen durchläuft.
Zur Durchführung des letzten Bearbeitungsschrittes, dem Schneiden, wird die Materialbahn ein letztes mal abgewickelt, diesmal wieder mit ihrem Anfang zuerst.
Die Lasersteuerlinie wird wieder detektiert. Mit dem "Weglaufen" der Lasersteuerlinie unter dem Detektor quer zur Transportrichtung verschiebt sich der Signalpegel der reflektierten und vom Detektor erfassten Strahlung auf der Empfängerfläche des Detektors. Entsprechend werden Steuersignale generiert und zur Steuerung der Materialbahnzuführung verwendet.
Das entstehende Schnittbild 5 wird so genau auf die Lasersteuerlinie 4 und damit auf das Prägebild 2, nach dem die Materialbahnteile später gefalzt werden, ausgerichtet, wie in Fig.1 gezeigt.

## Patentansprüche

1. Verfahren zur Bearbeitung einer in einer Transportrichtung bewegten Materialbahn, bei dem Strukturbilder, wie Druckbilder (1), Prägebilder (2) und Perforationsbilder zeitlich nacheinander in mehreren Bearbeitungsschritten auf die Materialbahn aufgebracht werden und die Materialbahn in einem letzten Bearbeitungsschritt entsprechend eines die Strukturbilder überlagernden Schnittbildes (5) in mehrere Materialbahnen aufgetrennt wird, wobei in einem Bearbeitungsschritt der Erzeugung eines Strukturbildes eine Steuerlinie geschaffen wird, die senkrecht zur Transportrichtung eine feste Relativlage zu dem in diesem Bearbeitungsschritt entstehenden Strukturbild hat und zu der die in nachfolgenden Bearbeitungsschritten entstehenden Strukturbilder und das Schnittbild (5) senkrecht zur Transportrichtung lagegesteuert erzeugt werden, **dadurch gekennzeichnet,**
**dass** eine Laserstrahlung, deren Strahlungsleistung abhängig von der Geschwindigkeit der bewegten Materialbahn gesteuert wird, auf die Oberfläche der Materialbahn gerichtet wird, die durch Materialabtrag oder Materialveränderung eine detektierbare Lasersteuerlinie (4) erzeugt und
**dass** auf der Lasersteuerlinie (4) durch zeitweise Änderungen der Laserparameter wie Strahlungsdauer, Strahlungsleistung oder Änderung der Strahlungsführung Lasermarkierungen (6) gesetzt werden, die als Informationsträger detektiert ein Signal bilden, mit welchen nachfolgende Bearbeitungsschritte zeitlich gesteuert werden.

2. Verfahren nach Anspruch 1 **dadurch gekennzeichnet,**
**dass** die Lasersteuerlinie (4) in einem Bearbeitungsschritt mit dem Einbringen der Prägebilder (2) erzeugt wird.

## Claims

1. Method for processing a material web being moved in a conveying direction, wherein structural images, such as printed images (1), embossed images (2) and perforation images, are provided on the material web in several successive processing steps, and in a final processing step, the material web is divided into several material webs according to a cut image (5) overlying the structural images, with a control line being formed in a processing step for generating a structural image, said control line having a fixed position, perpendicular to the conveying direction, relative to the structural image being formed in this processing step and with respect to which control line the structural images being formed in subsequent processing steps and the cut image (5) are generated in a position-controlled manner perpendicular to the conveying direction, **characterized in that**
a laser beam, whose radiation power is controlled as a function of the speed of the moving material web, is directed at the surface of the material web, creating a detectable laser control line (4) by material removal or by material modification, and temporary changes in the laser parameters, such as radiation duration, radiation power, or changes in guiding the beam are made so as to place laser marks (6) on the laser control line (4), which laser marks (6), detected as information carriers, form a signal enabling control of the timing of subsequent processing steps.

2. Method according to claim 1, **characterized in that** the laser control line (4) and the embossed images (2) are formed in one single processing step.

## Revendications

1. Procédé de traitement d'une bande de matière étant déplacé selon une direction de transport, dans lequel procédé des images structurelles, comme des images imprimées (1), des images gaufrées (2) et des images perforées, sont formées sur la bande de matière en plusieures étapes de traitement sucessives, et la bande de matière est divisée en plusieures bandes de matière, dans une étape de traitement finale, selon une image de coupe (5) qui est superposée aux images structurelles, une ligne de commande étant formée dans une étape de traitement destinée à produire une image structurelle, cette ligne de commande présentant une position fixe, perpendiculairement à la direction de transport, par rapport à l'image structurelle étant formée dans cette étape de traitement, et les images structurelles, qui sont formées par rapport à ladite ligne de commande dans des étapes de traitement ultérieures, sont produites, ainsi que l'image de coupe (5), perpendiculairement à la direction de transport par commande de positionnement, **caractérisé en ce que**
l'on dirige un faisceau laser, dont la puissance de rayonnment est commandée en fonction de la vitesse de déplacement de la bande de matière, vers la surface de la bande de matière, ce faisceau créant, par enlèvement de matière ou par modification de matière, une ligne de commande laser (4) détectable, et on met en oeuvre des modifications temporaires des paramètres du faisceau laser, comme la durée de rayonnement, la puissance de rayonnement, ou des modifications du guidage du faisceau afin de placer sur ladite ligne de commande laser (4) des repéres laser (6) qui, détectés en tant que supports d'information, forment un signal permettant de commander la séquence temporelle des étapes de traitement subséquentes.

2. Procédé selon la revendication 1, **caractérisé en ce que** la génération de ladite ligne de commande laser (4) et l'application des images gaufrées (2) sont réalisées dans une seule étape de traitement.
